(19) Europäisches Patentamt
European Patent Office
Office européen des brevets

(11) **EP 3 107 878 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
***C04B 28/26*** *(2006.01)* ***C09D 1/02*** *(2006.01)*

(21) Anmeldenummer: **15701951.4**

(86) Internationale Anmeldenummer:
**PCT/EP2015/051009**

(22) Anmeldetag: **20.01.2015**

(87) Internationale Veröffentlichungsnummer:
**WO 2015/124349 (27.08.2015 Gazette 2015/34)**

(54) **ANORGANISCHES BINDEMITTELSYSTEM FÜR VERBUNDWERKSTOFFE**

INORGANIC BINDING AGENT SYSTEM FOR COMPOSITE MATERIALS

SYSTÈME DE LIANT MINÉRAL POUR MATIÈRES COMPOSITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2014 DE 102014102090**

(43) Veröffentlichungstag der Anmeldung:
**28.12.2016 Patentblatt 2016/52**

(73) Patentinhaber: **Chemische Fabrik Budenheim KG 55257 Budenheim (DE)**

(72) Erfinder:
• **LIPPOLD, Kirstin 55268 Nieder-Olm (DE)**
• **MASURAT, Dirk 65343 Eltville (DE)**
• **LEISTER, Michael 55218 Ingelheim (DE)**

(74) Vertreter: **WSL Patentanwälte Partnerschaft mbB Kaiser-Friedrich-Ring 98 65185 Wiesbaden (DE)**

(56) Entgegenhaltungen:
**DE-A1- 2 714 889 DE-A1- 19 608 323 US-A- 2 964 415**

• **SUZUKI, TOMIO, NAITO, YOSHIMASA, WATANABE, KIMIE: "Inorganic binder compositions", CHEMICAL ABSTRACTS, Bd. 114, Nr. 25, 8, 14. Mai 1990 (1990-05-14), XP000192668, ISSN: 0009-2258 & JP H02 124756 A (SUZUKI SANGYO KK) 14. Mai 1990 (1990-05-14)**
• **CHEMICAL ABSTRACTS, Bd. 84 19. April 1976 (1976-04-19), Columbus, Ohio, US; abstract no.: 110633a, KAGAWA, MITSUNORI: "Inorganic binder for building material", XP63180 & JP S50 136327 A 29. Oktober 1975 (1975-10-29)**

**Beschreibung**

Die vorliegende Erfindung betrifft ein anorganisches Bindemittelsystem mit einem Metallborat als Härterkomponente und einem Alkalisilicat als Binderkomponente sowie ein Verfahren zur Herstellung eines Bindemittels oder eines Verbundwerkstoffs unter Verwendung des erfindungsgemäßen Bindemittelsystems.

Bindemittel dienen primär dazu, Feststoffe mit einem feinen Zerteilungsgrad miteinander zu verbinden. Bei den auf diese Weise gebundenen Feststoffen kann es sich entweder um Füllstoffe handeln, die vorrangig dazu dienen, das Volumen eines Stoffgemischs zu erhöhen, ohne dabei die wesentlichen Eigenschaften des Stoffgemisches zu ändern, oder um Funktionsstoffe, die vorrangig dazu dienen, einem Stoffgemisch bestimmte Eigenschaften zu verleihen.

Die typische funktionsweise von Bindemittelsystemen basiert auf der Reaktion einer Binderkomponente (Binder) mit einer Härterkomponente (Härter) unter Ausbildung eines mehr oder weniger schnell abbindenden bzw. aushärtenden Bindemittels mit den darin gebundenen Feststoffen.

Unter einem Bindemittelsystem wird hier also ein System bzw. ein Komponentensatz mit wenigstens einem Binder und wenigstens einem Härter verstanden, die unter Ausbildung eines Bindemittels miteinander reagieren können. Der Begriff Bindemittel bezeichnet schließlich die Substanz oder Masse, die aus der Reaktion des Binders mit dem Härter hervorgeht.

Die Kombination Bindemittel mit darin gebundenen Füllstoffen wird als Verbund bezeichnet. Ein solcher Verbund kann als ein dreidimensionaler Formkörper der gewünschten Gestalt geformt und in dieser Form ausgehärtet werden. Die Kombination aus Bindemittel und darin gebundenen Feststoffen kann aber auch auf ein Substrat aufgebracht werden, um auf diesem nach dem Aushärten eine Beschichtung zu bilden, die fest mit dem Substrat verbunden ist.

Aus dem Stand der Technik sind anorganische Bindemittelsysteme bekannt, die auf der Reaktion eines Binders in Form von löslichen oder gelösten Silicaten mit geeigneten Härtern beruhen. Für Mörtel und Kitte werden dabei üblicherweise Einkomponenten-Bindemittel eingesetzt, bei denen der Binder in Form von pulverförmigem Silicat mit dem ebenfalls pulverförmigen Härter und den ebenfalls pulverförmigen Füllstoffen oder Funktionsstoffen vermischt werden.

Im Falle zweikomponentiger Systeme, wird der Binder üblicherweise in Form von in Wasser gelöstem Silicat (Wasserglas) zu einer Mischung aus Härter und den zu bindenden Füllstoffen bzw. Funktionsstoffen gegeben und untergemischt. Der Härter kann dabei entweder flüssig oder fest sein. Ebenfalls möglich ist die Zugabe des Wasserglases zu den zu bindenden Füllstoffen bzw. Funktionsstoffen und die anschließende Begasung des Systems mit Kohlendioxid ($CO_2$).

Übliche in der Literatur beschriebene Härter für Silicate sind Kohlendioxid, Silikofluoride, Kohlensäureester, Glycolide aber auch verschiedene Metallphosphate. Insbesondere polymere Aluminiumphosphate mit der allgemeinen Formel $[Al(PO_3)_3]_n$ sind in der Literatur als Härter für Alkalisilicate seit langem bekannt.

In DE 2 443 717 A1 wird u.a. unter Verweis auf zwei ältere japanische Patentschriften von der Verwendung von Metallboraten und Borsäure zur Härtung von wasserlöslichen Silicaten für anorganische Überzüge berichtet. Nachteilig an den vorbeschriebenen Härtern sei jedoch unter anderem die unzureichende Wasser- und Chemikalienbeständigkeit der erzeugten Bindemittel.

In DE 2 443 717 A1 wird daher vorgeschlagen, statt der vorbeschriebenen Härter solche zu verwenden, die aus einer bei 300 bis 1500°C calcinierten Mischung von Boraten der II.-VIII. Hauptguppe des Periodensystems, Borsäure, Boroxid, Metallphosphaten, -silicaten, -oxiden, - hydroxiden, -carbonaten, -sulfaten und -nitraten bestehen. Bindemittelsysteme, in denen diese Härter zum Einsatz kommen, haben jedoch den Nachteil, dass durch die Calcinierung die Reaktivität so stark verringert wird, dass sich Topfzeiten der Massen ergeben, die eigentlich nur für eine manuelle Verarbeitung praktikabel sind. Insbesondere für schnell getaktete industrielle Prozesse, wie beispielsweise das Herstellen von Formkörpern, sind die Topfzeiten jedoch zu lang.

Nachteilig an den in DE 2 443 717 A1 beanspruchten Systemen ist zudem die aufwändige und energieintensive Herstellung der Borate, denn ein großer Teil der aufgeführten Borate ist kommerziell nicht erhältlich, und die für die Herstellung erforderlichen Rohstoffe sind nicht leicht zu beschaffen. Zudem liegen die notwendigen Calcinierungstemperaturen zumeist bei 1000°C oder gar darüber bzw. die niedriger getemperten Mischungen weisen sehr lange notwendige Haltezeiten von bis zu 5 Stunden auf. Das ist sehr unwirtschaftlich und führt zu hohen Herstellungskosten der Härter. Auch das beanspruchte Masseverhältnis von Härter zu Binder im Bereich >1 macht solche Bindemittelsysteme sehr teuer und damit unwirtschaftlich.

In EP 1 205 439 A1 wird die Verwendung eines Zinkborats mit der allgemeinen Formel $2ZnO \cdot mB_2O_3 \cdot xH_2O$ als Härter für Wassergläser beschrieben, wobei in dieser Formel m eine Zahl in dem Bereich von 2,8 bis 3,2 sein kann und x nicht größer als 4 sein soll. Zinkborate mit einem Wassergehalt x kleiner 4 sind vergleichsweise inreaktiv. Das ist von Nachteil, da die geringe Reaktivität zu Aushärtungszeiten führt, die insbesondere für schnell getaktete industrielle Prozesse, wie beispielsweise das Herstellen von Formkörpern, zu lang sind.

In DE 3043856 wird eine silicatbasierte Bindemittelzubereitung für den Feuerfestbereich beschrieben. Diese Zubereitung besteht aus 5 bis 60% Alkalisilicat, 5 bis 50% eines sauren Phosphates zwei- oder dreiwertiger Metalle, 5 bis 50% Boraten, Boroxid oder Borsäure, 1 bis 70% Kieselsäure, 0,1 bis 80% reaktives Aluminiumoxid, sowie 1 bis 5% ionenaustauschfähiges Aluminiumsilicat. Das Bindemittel reagiert in dem zunächst ein Gel entsteht, das dann in ein Sol übergeht und dabei die die Bindung ausbildet. Aufgrund dieses Reaktionsweges und der Gesamtzusammensetzung, der für die Verwendung im Feuerfestbereich geeignet sein mag, ist die Reaktivität des Binders vergleichsweise gering und damit die Abbindezeit insbesondere für schnell getaktete industrielle Prozesse, wie beispielsweise die Herstellung von Formkörpern, deutlich zu lang.

Suzuki, Tomio, Naito, Yoshimasa, Watanabe und Kimie beschreiben in ihrem Artikel "Inorganic binder compositions" in Chemical Abstracts (vol. 114, no. 25, 8, 14 May 1990) anorganische Bindemittelzusammensetzungen, die wasserlösliche Alkalisilikate, anorganische Härterkomponenten und Zinkborat als Härtungsregulator enthalten, wobei das Zinkborat vorzugsweise $ZnO.mB_2O_3.nH_2O$ ist, bei dem m = 0,5-2,5 beträgt und $n$ = 0-2,5 beträgt, und wobei hiervon 1-40 Gew.-% pro 100 Gew.-% der Silicate in der Zusammensetzung zugegeben werden.

Kagawa und Mitsunori beschreiben in ihrem Artikel "Inorganic binder for building material" in Chemical Abstracts (vol. 84, 19 April 1976, Columbus, Ohio, US) anorganische Bindemittelzusammensetzungen, die aus Silicaten, wie z.B. Natrium- und Kaliumsilicat, und Metallphosphaten, wie z.B. Zinkphosphat, bestehen.

Die Aufgabe der vorliegenden Erfindung bestand darin, ein Bindemittelsystem mit hoher Reaktivität und damit kurzen Abbinde- und Aushärtungszeiten bereitzustellen, welches insbesondere für schnell getaktete industrielle Prozesse, wie beispielsweise das Herstellen von Formkörpern, geeignet ist. Gleichzeitig soll das Bindemittelsystem dem daraus entstehenden Verbund eine hohe Wasser- und Witterungsbeständigkeit sowie hydrophobe Eigenschaften verleihen. Eine hohe Temperaturbeständigkeit des Verbundes von bis zu 750°C soll je nach verwendetem Füllmaterial ebenfalls erreicht werden.

Mit der vorliegenden Erfindung wird ein Bindemittelsystem mit einem Metallborat als Härterkomponente und einem Alkalisilicat als Binderkomponente vorgeschlagen, wobei das Bindemittelsystem dadurch gekennzeichnet ist, dass es zu wenigstens 90 Gew.-% aus einer Bindemittelbasis mit der folgenden Zusammensetzung besteht:

| | |
|---|---|
| 18 bis 40 Gew.-% | Härterkomponente A, bestehend aus wenigstens einem Borat der allgemeinen Formel w $M^{II}O \cdot$ x $M^{III}_2O_3 \cdot$ y $B_2O_3 \cdot$ z $H_2O$, wobei<br><br>$M^{II}$ = Mg, Ca, Sr, Zn oder Cu und $0,5 \leq w \leq 4$,<br>$M^{III}$ = Al, Fe oder Cr und $0 \leq x \leq 0,5$,<br>$1,5 \leq y \leq 3,5$,<br>$0,33 \leq \sum w/y \leq 1,34$,<br>$0 \leq \sum x/y \leq 0,25$ und<br>$0 \leq z \leq 7,0$ |
| 55 bis 80 Gew.-% | Binderkomponente B, bestehend aus wenigstens einem Alkalisilicat der allgemeinen Formel: $R_2O \cdot$ x $SiO_2$, wobei<br><br>R = Na oder K und<br>$2,0 \leq x \leq 3,35$ und |
| 1 bis 10 Gew.-% | Beschleunigerkomponente C, bestehend aus einem Metallsalz der Ortho-, Di- oder Triphosphorsäure, ausgewählt unter vollständig deprotonierten Ortho- und Diphosphaten von Nichtalkalimetallen der 3., 4. und 5. Periode und Aluminiumdihydrogentriphosphat oder einem Gemisch hiervon. |

Das Bindemittelsystem mit der oben angegebenen Zusammensetzung ist besonders gut geeignet zur Herstellung von Verbundwerkstoffen und Formkörpern aus den unterschiedlichsten Substraten. So können sowohl anorganische (wie beispielsweise Mineralien, Glas oder Metall) oder organische (wie beispielsweise Kunststoff oder nachwachsende Rohstoffe oder Recyclingstoffe) Materialien gebunden werden. Besonders gut geeignet ist das Bindemittel für die Herstellung von Verbundwerkstoffen und Formkörpern aus offen- oder geschlossenzelligen geblähten Mineralien, wie beispielsweise: Blähton, Perlit, geschäumten Gläsern.

Das ausgehärtete Bindemittel ist frei von organischen Bestandteilen, nicht brennbar, wasser- und witterungsbeständig, sowie UV-resistent und UV-blockend. Darüber hinaus kann es durch den Zusatz geeigneter Farbstoffe und Pigmente auch Infrarotabsorbierend oder reflektierend eingestellt werden. Die mit dem erfindungsgemäßen Bindemittel überzogenen Produkte und die daraus hergestellten Verbundwerkstoffe können sowohl im Innen- als auch im Außenbereich vielfältig eingesetzt werden.

Der erfindungsgemäße Härter basiert auf reaktiven Metallboraten der oben unter Härterkomponente A angegebenen allgemeinen molaren Formel. Die Härterkomponente A besteht erfindungsgemäß aus wenigstens einem Borat der angegebenen Formel. Demnach kann die Härterkomponente A entweder aus nur einem bestimmten Borat der angegebenen Formel bestehen oder aus zwei oder mehreren verschiedenen Boraten der angegebenen Formel. Das Summenzeichen hinsichtlich der Verhältnisse w/y bzw. x/y ist in diesem Zusammenhang so zu verstehen, dass, wenn mehrere verschiedene Metallborate der angegebenen Formel in der Härterkomponente A enthalten sind, das Verhältnis jeweils für die Summe von w, x bzw. y angegeben ist.

Bei bestimmten Ausführungsformen gilt für das wenigstens eine Borat der allgemeinen Formel $w \, M^{II}O \cdot x M^{III}_2O_3 \cdot y B_2O_3 \cdot z H_2O$, dass x = 0 und M" = Mg, Ca oder Zn.

Bestimmte alternative Ausführungsformen der Erfindung sind dadurch gekennzeichnet, dass $0,66 \leq \sum w/y \leq 1,34$.

Bei einigen bestimmten Ausführungsformen gilt für die Hydratstufe des Borats $0 \leq z \leq 5,0$.

Bei spezifischen Ausführungsformen gilt für das wenigstens eine Borat der allgemeinen Formel $w \, M^{II}O \cdot x M^{III}_2O_3 \cdot y B_2O_3 \cdot z H_2O$, dass

$$M^{II} = Mg, Ca, Sr, Zn \quad und \quad 0,5 \leq w \leq 3,$$

$$M^{III} = Al, Fe \text{ oder } Cr \quad und \quad 0 \leq x \leq 0,5,$$

$$1,5 \leq y \leq 3,0,$$

$$0,33 \leq \sum w/y \leq 1,34,$$

$$0 \leq \sum x/y \leq 0,25$$

und

$$3 \leq z \leq 7,0.$$

Die erfindungsgemäß verwendeten Metallborate sind entweder direkt kommerziell erhältlich oder können relativ leicht durch die Reaktion geeigneter Metalloxide oder -salze mit wässrigen Borat- oder Borsäurelösungen hergestellt werden. Geeignete Herstellvorschriften finden sich beispielsweise in DD 220 950 und EP 1 205 439.

Im Allgemeinen liegt gemäß der vorliegenden Erfindung der Anteil des Härters an der Bindemittelbasis in dem Bereich von 18 bis 40 Gew.-%. Bei bestimmten Ausführungsformen beträgt der Anteil der Härterkomponente A an der Bindemittelbasis innerhalb des zuvor genannten Bereiches höchstens 38 Gew.-%, höchstens 37 Gew.-%, höchstens 34 Gew.-% oder gar nur höchstens 32 Gew.-%. Bei bestimmten Ausführungsformen beträgt der Anteil der Härterkomponente A an der Bindemittelbasis innerhalb des zuvor genannten Bereiches mindestens 24 Gew.-%, mindestens 26 Gew.-% oder gar mindestens 28 Gew.-%. Bei bestimmten Ausführungsformen liegt der Anteil des Härters an der Bindemittelbasis in dem Bereich von 20 bis 35 Gew.-%, in dem Bereich von 22 bis 32 Gew.-%, in dem Bereich von 24 bis 37 Gew.-%, in dem Bereich von 26 bis 34 Gew.-% oder in dem Bereich von 28 bis 32 Gew.-%.

Der erfindungsgemäße Binder basiert auf Alkalisilicaten der oben unter Binderkomponente B angegebenen allgemeinen molaren Formel. Diese Alkalisilicate sind nahezu vollständig wasserlöslich. Unter nahezu vollständig wasserlöslichen Alkalisilicaten werden hierbei solche verstanden, die bei 20°C unter Rühren zu wenigstens 99,5 Gew.-% in Wasser in Lösung gehen (d.h. maximal 0,5 Gew.% in Wasser bei 20°C unlöslicher Rest). Die erfindungsgemäß eingesetzten Alkalisilicate besitzen ein molares Modul $SiO_2/R_2O$ (mit R= Na, K) im Bereich von 2,0 bis 3,35. Niedrigere Module sind zu reaktiv für eine vollständige und gleichmäßige Durchhärtung des Bindemittels und würden durch den damit verbundenen hohen $R_2O$-Anteil keine ausreichenden Wasserfestigkeiten der Bindung zulassen. Alkalisilicate mit höherem Modul sind dagegen nicht reaktiv genug, um mit der erfindungsgemäßen Härterkomponente in der gewünschten Geschwindigkeit und Abbindegüte auszuhärten.

Bei bestimmten Ausführungsformen der Erfindung weisen die Alkalisilicate der Binderkomponente B einen Glühverlust (nach Tempern für 2 Stunden) bei 800°C in dem Bereich von 8 bis 22 Gew.-% auf. Dies entspricht nahezu 1:1 einem Wassergehalt von 8 bis 22 Gew.-%. Dieser Bereich bringt den Vorteil mit sich, dass bei Wassergehalten unterhalb von 8 Gew.-% die Löslichkeit und die Lösegeschwindigkeit der Alkalisilicate nicht optimal sind. Wassergehalte größer 22 Gew.-% können mit einer geringeren Lagerfähigkeit und Haltbarkeit des Bindemittels einhergehen, da Härter und Binder in diesem Fall unter Umständen bereits ohne weitere Wasserzugabe miteinander reagieren können.

Im Allgemeinen liegt gemäß der vorliegenden Erfindung der Anteil der Binderkomponente B an der Bindemittelbasis in dem Bereich von 55 bis 80 Gew.-%. Bei bestimmten Ausführungsformen beträgt der Anteil der Binderkomponente B an der Bindemittelbasis innerhalb des zuvor genannten Bereiches mehr als 60 Gew.-% oder gar mehr als 70 Gew.-%. Bei bestimmten Ausführungsformen beträgt der Anteil der Binderkomponente B an der Bindemittelbasis innerhalb des zuvor genannten Bereiches höchstens 78 Gew.-% oder nur höchstens 75 Gew.-% . Bei sehr spezifischen Ausführungsformen liegt der Anteil der Binderkomponente B an der Bindemittelbasis in dem Bereich von 62 bis 70 Gew.-% oder in dem Bereich 65 bis 68 Gew.-%.

Erfindungsgemäß enthält die Bindemittelbasis einen Anteil von 1 bis 10 Gew.-% Beschleunigerkomponente C, bestehend aus einem Metallsalz der Ortho-, Di- oder Triphosphorsäure, ausgewählt unter vollständig deprotonierten Ortho- und Diphosphaten von Nichtalkalimetallen der 3., 4. und 5. Periode des Periodensystems und Aluminiumdihydrogentriphosphat oder einem Gemisch hiervon.

Bei bestimmten Ausführungsformen der Erfindung besteht die Beschleunigerkomponente C aus einem Metallsalz der Ortho-, Di- oder Triphosphorsäure, ausgewählt unter vollständig deprotonierten Ortho- und Diphosphaten von Nebengruppenmetallen der 3., 4. und 5. Periode des Periodensystems und Aluminiumdihydrogentriphosphat oder einem Gemisch hiervon. Bei spezifischen Ausführungsformen sind die Nebengruppenmetalle aus der 4. und 5. Periode des Periodensystems ausgewählt.

Vorzugsweise besteht die Beschleunigerkomponente C bei bestimmten Ausführungsformen der Erfindung aus wenigstens einem Phosphat der allgemeinen Formel

$$wM^{II}O \cdot xM^{III}_2O_3 \cdot yP_2O_5 \cdot zH_2O,$$

mit

$$M^{II} = Zn \text{ und } 0 \leq w \leq 3,$$

$$M^{III} = Al \text{ oder } Fe \ 0 \leq x \leq 2$$

$$1 \leq y \leq 3,$$

$$0 \leq z \leq 3.$$

Bei bestimmten Ausführungsformen der Erfindung beträgt der Anteil der genannten Beschleunigerkomponente C 2 bis 9 Gew.-%. Bei manchen Ausführungsformen liegt der Anteil der Beschleunigerkomponente C in dem Bereich von 2 bis 8 Gew.-%. Bei weiteren Ausführungsformen liegt der Anteil der Beschleunigerkomponente C in dem Bereich von 2 bis 6 Gew.-%. Bei spezifischen Ausführungsformen liegt der Anteil der Beschleunigerkomponente C in dem Bereich von 3 bis 5 Gew.-%. Bei manchen Ausführungsformen kann es von Vorteil sein, wenn der Anteil der Beschleunigerkomponente C < 5 Gew.-% beträgt.

Durch die Ergänzung der Härterkomponente A auf Boratbasis durch die Beschleunigerkompononente C auf Phosphatbasis lassen sich die Abbindegeschwindigkeit, sowie Wasser- und Witterungsbeständigkeit optimal einstellen und aufeinander abstimmen. So werden schnell ausreichend hohe Festigkeiten der Bindemittelmasse erreicht, was insbesondere für schnell getaktete industrielle Prozesse, wie beispielsweise das Herstellen von Formkörpern wichtig ist, ohne diese jedoch zu schnell durchzuhärten, was sich negativ auf die Wasser und Witterungsbeständigkeit auswirken würde.

Bei den Ausführungsformen, bei denen die Beschleunigerkomponente C ein Metallsalz der Orthophosphorsäure enthält, ist dieses vorzugsweise unter den vollständig deprotonierten Orthophosphaten von Nebengruppenmetallen der 4. und 5. Periode frei ausgewählt. Zu diesen tertiären Metallorthophosphaten zählen beispielsweise Zinkorthophosphat ($Zn_3(PO_4)_2$), Zirkoniumorthophosphat ($Zr_3(PO_4)_4$) oder Cobaltorthophosphat ($Co_3(PO_4)_2$). Die erfindungsgemäßen tertiären Metallorthophosphate können entweder einzeln oder im Gemisch miteinander oder im Gemisch mit den anderen erfindungsgemäß als Beschleunigerkomponente C eingesetzten Stoffen eingesetzt werden.

Bei den Ausführungsformen, bei denen die Beschleunigerkomponente C ein Metallsalz der Diphosphorsäure enthält, kann dieses unter den vollständig deprotonierten Diphosphaten von Nichtalkalimetallen der 3., 4. und 5. Periode frei ausgewählt werden. Zu diesen Metalldiphosphaten zählen beispielsweise Eisen(III)-diphosphat ($Fe_4(P_2O_7)_3$ und Zinkdiphosphat ($Zn_2P_2O_7$). Die erfindungsgemäßen Metalldiphosphate können entweder einzeln oder im Gemisch miteinander oder im Gemisch mit den anderen erfindungsgemäß als Beschleunigerkomponente C eingesetzten Stoffen eingesetzt werden.

Das eingesetzte Aluminiumdihydrogentriphosphat ($AlH_2P_3O_{10}$) ist ein lineares Kondensat von drei Orthophosphateinheiten, welches azide Eigenschaften aufweist.

Die Ortho-, Di- oder Triphosphate in der Beschleunigerkomponente C können entweder als Anhydrat oder als Hydrat vorliegen. Von der vorliegenden Erfindung erfasst werden als Beschleunigerstoffe beispielsweise nicht nur das Anhydrat des Zinkorthophosphats ($Zn_3(PO_4)_2$) sondern auch Zinkorthophosphat-2-hydrat ($Zn_3(PO_4)_2 \cdot 2H_2O$) und neben dem Anhydrat des Aluminiumdihydrogentriphosphats ($AlH_2P_3O_{10}$) auch Aluminiumdihydrogentriphosphat-2-hydrat ($AlH_2P_3O_{10} \cdot 2H_2O$).

Zur Bereitstellung des Bindemittelsystems in Pulverform liegen die Härterkomponente A, die Binderkomponente B und die Beschleunigerkomponente C zweckmäßigerweise jeweils in Pulverform vor. Die Härterkomponente A, die Binderkomponente B und die Beschleunigerkomponente C können dabei entweder als in separaten Gebinden enthaltene Komponenten eines vollständigen Bindemittelsystem-Komponentensatzes bzw. als in separaten Gebinden enthaltene Teile eines Bindemittelsystem-Kits vorliegen oder als teilweise oder vollständig vorgefertigte Mischung mit den anderen Komponenten. Bei bestimmten Ausführungsformen liegen die Härterkomponente A und Beschleunigerkomponente C im Gemisch vor. Bei anderen Ausführungsformen liegen die Härterkomponente A, die Binderkomponente B und die Beschleunigerkomponente C als vollständig vorgefertigte Mischung in Pulverform vor.

Um eine besonders gute Reaktivität und eine besonders schnelle Abbindung zu gewährleisten, beträgt die maximale Partikelgröße der Härterkomponente A, der Binderkomponente B und/oder der Beschleunigerkomponente C bei bestimmten Ausführungsformen maximal 500 μm, bei anderen Ausführungsformen maximal 200 μm und bei noch anderen Ausführungsformen maximal 100 μm. Bei manchen Ausführungsformen werden die Härterkomponente A, die Binderkomponente B und/oder die Beschleunigerkomponente C zur Erhöhung der Reaktivität, zur Beschleunigung der Abbindung sowie zur Verbesserung der Spritzbarkeit fein vermahlen mit einer maximalen Partikelgröße von 10 μm eingesetzt.

Bei bestimmten Ausführungsformen der Erfindung liegt die Binderkomponente A als pulverförmiges Alkalisilicat mit einer Partikelgröße in dem Bereich von 10 bis 500 μm vor. Geringere Partikelgrößen wären zu reaktiv und würden stark stauben und die Haltbarkeit des Bindemittels aufgrund ihrer Hygroskopizität stark absenken. Größere Partikelgrößen wären zu inreaktiv und deren Lösungsgeschwindigkeit wäre zu gering. Vorzugsweise liegt der Mittelwert der Partikelgröße in dem Bereich von 60 bis 130 μm.

Bei bestimmten Ausführungsformen der Erfindung liegt die Härterkomponente B als pulverförmiges Borat mit einer Partikelgröße in dem Bereich von 0,5 bis 80 μm vor. Vorzugsweise liegt der Mittelwert der Partikelgröße in dem Bereich von 5 bis 25 μm. Zur Erhöhung der Reaktivität und damit der Abbindegeschwindigkeit kann es in bestimmten Fällen vorteilhaft sein, die Partikelgröße der Härterkomponente B beispielsweise durch einen Mahlschritt zu verkleinern und eine Partikelgröße in dem Bereich von 0,5 und 20 μm einzustellen. Vorzugsweise liegt der Mittelwert der Partikelgröße bei diesen Ausführungsformen in dem Bereich von 4 bis 8 μm.

Bei bestimmten Ausführungsformen der Erfindung liegt die Beschleunigerkomponente C als pulverförmiges Phosphat mit einer Partikelgröße in dem Bereich von 0,5 bis 100 μm vor. Vorzugsweise liegt der Mittelwert der Partikelgröße in dem Bereich von 5 bis 25 μm. Zur Erhöhung der Reaktivität und der Abbindegeschwindigkeit kann es in bestimmten Fällen vorteilhaft sein, die Partikelgröße der Beschleunigerkomponente C beispielsweise durch einen Mahlschritt zu verkleinern und eine Partikelgröße in dem Bereich von 0,5 bis 20 μm einzustellen. Vorzugsweise liegt der Mittelwert der Partikelgröße bei diesen Ausführungsformen in dem Bereich von 4 bis 8 μm.

Zur Verringerung der Reaktivität und zur zeitlichen Verzögerung der Abbindereaktion kann das Pulver einer in Pulverform bereitgestellten Härterkomponente A, Binderkomponente B und/oder Beschleunigerkomponente C mit einer wasserfesten aber in alkalischen Medien löslichen Beschichtung überzogen sein. Unter einem solchen Überzug werden also solche Überzüge verstanden, die sich bei 20°C bis zu einem pH-Wert von 7 in Wasser nicht auflösen, die sich ab einem pH-Wert, der größer als 7 ist, bei 20°C aber innerhalb von wenigen Minuten auflösen. Solche Überzüge können beispielsweise aus Polyacrylat oder Polyvinylacetat bestehen. Soweit das Pulver eines in Pulverform bereitgestellten Härters, Binders oder Beschleunigers mit einer Beschichtung überzogen sein sollte, so verstehen sich die Anteilsangaben der entsprechenden Härterkomponente A, Binderkomponente B und/oder Beschleunigerkomponente C einschließlich der Überzugsmasse.

Die Vorteile des erfindungsgemäßen Bindemittelsystems werden durch die oben beschriebene Zusammensetzung der Bindemittelbasis erreicht. Hierfür besteht das Bindemittelsystem zu wenigstens 90 Gew.-% aus dieser Bindemittelbasis. Bei bestimmten Ausführungsformen besteht das Bindemittelsystem zu wenigstens 95 Gew.-%, wenigstens 98 Gew.-%, wenigstens 99 Gew.-% oder gar 100 Gew.-% aus dieser Bindemittelbasis.

Bei den Ausführungsformen bei denen das Bindemittelsystem nicht zu 100 Gew.-% aus der Bindemittelbasis besteht, sind neben der Bindemittelbasis noch weitere Bestandteile enthalten, die in der Summe jedoch nicht mehr als einen Anteil von bis zu 10 Gew.-% an dem Bindemittelsystem ausmachen dürfen. Bei bestimmten Ausführungsformen macht die Summe der Anteile der zusätzlichen Bestandteile, die neben der Bindemittelbasis in dem Bindemittelsystem enthalten sind, höchstens 5 Gew.-%, höchstens 2 Gew.-% oder gar nur höchstens 1 Gew.-% aus.

Als zusätzliche Bestandteilen des Bindemittelsystems kommen insbesondere eine Additivkomponente D zur Verbesserung der Wasserbeständigkeit und/oder eine Hilfsstoffkomponente E zur Verbesserung der Fließeigenschaften oder zur Verbesserung der Benetzungseigenschaften und/oder eine Farbstoffkomponente F und/oder eine Pigmentkomponente G und/oder eine Funktionskomponente H zur Verbesserung der wasserabweisenden Eigenschaften des fertigen Verbundes in Betracht.

Bei einer Ausführungsform der Erfindung ist neben der Bindemittelbasis zusätzlich noch einen Anteil von bis zu 10 Gew.-% einer Additivkomponente D zur Verbesserung der Wasserbeständigkeit enthalten. Bei bestimmten Ausführungsformen der Erfindung beträgt der Anteil der Additivkomponente D nur bis zu 5 Gew.-%, bis zu 2 Gew.-% oder gar nur bis zu 1 Gew.-%. Beispielsweise kann bei einer Ausführungsform als Additivkomponente D zur Verbesserung der Wasserbeständigkeit ein Stoff enthalten sein, der ausgewählt ist unter Zinkoxid (ZnO), Natriumsilicofluorid ($Na_2SiF_6$) und Gemischen hiervon.

Zur Verbesserung der Fließeigenschaften, zur Verhinderung von Verklumpung und Verbackungen und zur Verbesserung des Benetzungsverhaltens kann es zweckmäßig sein, dem Bindemittelsystem ein übliches Trennmittel und/oder Fließmittel und /oder Benetzungsmittel zuzugeben.

Bei einer Ausführungsform der Erfindung ist neben der Bindemittelbasis daher zusätzlich noch ein Anteil von bis zu 2 Gew.-% einer Hilfsstoffkomponente E in Form eines Trenn-, Fließ- und /oder Benetzungsmittels enthalten. Bei bestimmten Ausführungsformen der Erfindung beträgt der Anteil der Hilfsstoffkomponente E nur bis zu 1 Gew.-%.

Zur Verbesserung der Visualisierung der Binderverteilung kann es vorteilhaft sein dem Bindemittelsystem eine Farbstoffkomponente F zuzusetzen. Bei einer Ausführungsform der Erfindung ist neben der Bindemittelbasis daher zusätzlich noch ein Anteil von bis zu 1 Gew.-% einer Farbstoffkomponente F enthalten.

Zur Verbesserung der Beständigkeit des Bindemittels gegenüber der Einwirkung von Sonnenstrahlung und/oder zur Erzielung IR-absorbierender, reflektierender und/oder farbgebender Eigenschaften kann es vorteilhaft sein dem Bindemittelsystem eine Pigmentkomponente G zuzusetzen, die dazu geeignet ist, UV-Strahlung, Infrarotstrahlung oder sichtbares Licht in bestimmten Wellenlängenbereichen zu absorbieren oder zu reflektieren. Bei einer Ausführungsform der Erfindung ist neben der Bindemittelbasis daher zusätzlich noch ein Anteil von bis zu 10 Gew.-% einer Pigmentkomponente G enthalten. Bei bestimmten Ausführungsformen der Erfindung beträgt der Anteil der Pigmentkomponente G nur bis zu 5 Gew.-%, bis zu 2 Gew.-% oder gar nur bis zu 1 Gew.-%. Bei bestimmten Ausführungsformen ist die Pigmentkomponente G mit Anteilen im Bereich von 0,1 bis 3 Gew.-% enthalten.

Zur Verbesserung der wasserabweisenden Eigenschaften des Verbundsystems kann es zweckmäßig sein, dem Bindemittelsystem 0,1 bis 4 Gew.-% einer Funktionskomponente H in Form eines pulverförmigen Hydrophobierungsmittels zuzusetzen.

Zur Bereitstellung des Bindemittelsystems in Pulverform liegen die vorgenannten zusätzlichen Komponenten D, E, F und G in dem System zweckmäßigerweise in Pulverform vor. Die Komponente D, E, F und G liegen dabei entweder als separate Komponenten oder als Bestandteile einer teilweise oder vollständig vorgefertigten Mischung mit der Härterkomponente A, der Binderkomponente B und/oder der Beschleunigerkomponente C vor, ohne hierbei jedoch dem Anteil der Härterkomponente A, der Binderkomponente B oder der Beschleunigerkomponente C an der Bindemittelbasis oder der Bindemittelbasis allgemein zugerechnet zu werden.

Bei bestimmten Ausführungsformen ist die Partikelgröße aller in dem Bindemittelsystem enthaltenen Komponenten so gewählt, dass die maximale Partikelgröße aller in dem Bindemittel enthaltenen Partikel 200 $\mu$m beträgt. Bei manchen Ausführungsformen ist die Partikelgröße der Komponenten so gewählt, dass die maximale Partikelgröße aller in dem Bindemittel enthaltenen Partikel 10 $\mu$m beträgt.

Die zur vollständigen Abbindung und Aushärtung des erfindungsgemäßen Bindemittelsystems notwendigen Temperaturen liegen abhängig vom Verhältnis von Binder- und Härterkomponente, vom Modul des Silicates, der Reaktivität der Härterkomponente, dem Anteil an zugesetztem Wasser, sowie den Prozesszeiten der einzelnen Verfahrensschritte in dem Bereich von lediglich 0 und 80°C. Ein kurzzeitiges Erhöhen der Temperatur über 100°C oder eine Trocknung des Verbundwerkstoffes mit Mikrowellenstrahlung verbessert allerdings die Festigkeit und Beständigkeit des Materials.

Das erfindungsgemäße Bindemittelsystem dient in erster Linie dem Verbinden von darin verteilten Feststoffen. Hierbei kann es sich entweder um Füllstoffe handeln, die vorrangig dazu dienen, das Volumen eines Stoffgemischs zu erhöhen, ohne dabei die wesentlichen Eigenschaften des Stoffgemisches zu ändern, wie zum Beispiel Sand, Perlit oder Holzhackschnitzel, oder um Funktionsstoffe, die vorrangig dazu dienen, einem Stoffgemisch bestimmte Eigenschaften zu verleihen, wie zum Beispiel Glas-, Kohlenstoff- oder Keramikfasern.

Zur Anwendung des erfindungsgemäßen Bindemittelsystems sind verschiedene Methoden und Verfahren möglich.

Zum einen können die Komponenten des erfindungsgemäßen Bindemittelsystems in Pulverform ggf. gemeinsam mit zu bindendem Füllstoff bzw. Funktionsstoff homogen miteinander vermischt werden. Anschließend wird dann durch Zugabe und Einmischen von Wasser die Abbindereaktion gestartet. Zum anderen kann in den Fällen in denen ein Füllstoff bzw. Funktionsstoff gebunden werden soll, der zu bindende Füllstoff bzw. Funktionsstoff zunächst mit der erforderlichen Menge Wasser versetzt und mit dieser vermischt werden, um erst danach in einem zweiten Verfahrensschritt das pulverförmige Bindemittel zuzusetzen und damit die Abbindereaktion zu starten.

Im Falle leicht quellender oder saugfähiger Füllstoffe bzw. Funktionsstoffe sollte bevorzugt das erste Verfahren angewendet werden, um die benötigte und anschließend wieder zu entfernende Wassermenge so gering wie möglich zu halten. Das zweite Verfahren eignet sich hingegen insbesondere für nicht quellende oder saugfähige Materialien, deren Oberflächen so zunächst mit einem gleichmäßigen Feuchtigkeitsfilm überzogen werden können.

Die Reaktivität des erfindungsgemäßen Bindemittelsystems kann so abgestimmt werden, dass nach Wasserzugabe bzw. dem Kontakt mit bereits zugegebenem Wasser bereits nach wenigen Minuten eine mechanische Festigkeit des Verbundes erreicht wird, die mechanische Manipulationen, wie die Entnahme aus Formwerkzeugen, ein Transportieren, das Stapeln oder das Umsetzen ermöglicht. Die Reaktivität des erfindungsgemäßen Bindemittelsystems kann aber auch so abgestimmt werden, dass eine mindestens 60 minütige offene Verarbeitungszeit entsteht, oder dass ohne Temperaturerhöhung keine Abreaktion des Bindemittels stattfindet.

Ein Versprühen wässriger Dispersionen des Bindemittels, insbesondere der Mischungen mit mikronisierten Härterkomponenten, insbesondere zur Verbesserung der Oberflächenfestigkeit und -resistenz ist ebenfalls möglich.

Bei dem erfindungsgemäßen Verfahren zur Herstellung eines Bindemittels oder eines Verbundwerkstoffs wird dem erfindungsgemäßen Bindemittelsystem mit der oben spezifizierten Zusammensetzung Wasser zugesetzt, wobei das Gewichtsverhältnis Wasser zu Bindemittelsystem in dem Bereich von 0,5 bis 2,5 oder in dem Bereich von 0,5 bis 1,5 liegt. Hierdurch wird die Reaktion zwischen Binder und Härter in Gang gesetzt, und das dadurch entstehende Bindemittel härtet nach und nach aus.

Bei einer Ausführungsform des erfindungsgemäßen Verfahrens wird die Bindereaktion bei Temperaturen in dem Bereich von 0 bis 80°C durchgeführt. Bei manchen Ausführungsformen wird die Bindereaktion bei Temperaturen in dem Bereich von 20 bis 35°C durchgeführt.

Bei einer Ausführungsform des erfindungsgemäßen Verfahrens wird die Bindereaktion durch das Einwirkenlassen von Mikrowellenstrahlung unterstützt.

Je nachdem, wie die Reaktivität des erfindungsgemäßen Bindemittelsystems eingestellt wird, ist die Aushärtung des erfindungsgemäßen Bindemittels bei manchen Ausführungsformen bereits nach 30 Minuten so weit vorangeschritten, dass das Bindemittel eine so hohe Festigkeit erlangt hat, dass es kaum noch verformt werden kann. Bei bestimmten Ausführungsformen ist die Aushärtung des erfindungsgemäßen Bindemittels sogar schon nach 15 Minuten so weit vorangeschritten, dass das Bindemittel eine so hohe Festigkeit erlangt hat, dass es kaum noch verformt werden kann.

Näheres hierzu ergibt sich auch aus den nachfolgenden Ausführungsbeispielen und den anhängenden Figuren, wobei

Figur 1    eine grafische Gegenüberstellung der Druckfestigkeit in Abhängigkeit der Zusammensetzung vor und nach Bewässerungstest zeigt, wobei die Zusammensetzungen im grau unterlegten Bereich nicht erfindungsgemäß sind, und

Figur 2    eine grafische Gegenüberstellung der Oberflächenfestigkeit in Abhängigkeit der Zusammensetzung vor und nach Bewässerungstest zeigt, wobei auch hier die Zusammensetzungen im grau unterlegten Bereich nicht erfindungsgemäß sind.

**Ausführungsbeispiele**

**1. Bindung von Perlit**

In den folgenden Beispielen wird gezeigt, wie Druckfestigkeit, Oberflächenfestigkeit (Härte) und Wasserbeständigkeit der Bindung vom Anteil der Binderkomponente B und der Härterkomponente A abhängen.

Dazu wurden zylindrische Proben (Höhe 50 mm, Ø 50 mm) aus 18,5 g eines offenzelligen Perlits (Schüttdichte 120 kg/m$^3$) und jeweils 4,0 g Bindemittel und 10,0 g Wasser hergestellt. Der Verdichtungsfaktor liegt bei 1,5 und die Probekörperweisen nach Trocknung eine Dichte von 237 ± 2 kg/m$^3$ auf. Als Binderkomponente B kam das pulverförmige Natriumsilicat ($Na_2O \cdot 2SiO_2$) Britesil C20 der Firma PQ zum Einsatz. Die Härterkomponente A besteht aus demZinkborat ($2ZnO \cdot 3B_2O_3 \cdot 5H_2O$) Typ 20 der Firma Schälchli Chemie und liegt im Gemisch mit der Beschleunigerkomponente C in Form des Zinkphosphates $Zn_3(PO_4)_2$ Z33-81 der Firma Budenheim vor. Die genaue Bindemittelzusammensetzung ist in Tabelle 1 aufgeführt:

Tabelle 1: Bindemittelzusammensetzung (mit * markierte Zusammensetzungen sind nicht erfindungsgemäß)

| Beispiel | Rohstoff [Gew.-%] | | |
|---|---|---|---|
| | Natriumdisilicat | Zinkborat | Zinkphosphat |
| Z1 | 62 | 35 | 3 |
| Z2* | 100 | - | - |

(fortgesetzt)

| Beispiel | Rohstoff [Gew.-%] | | |
|---|---|---|---|
| | Natriumdisilicat | Zinkborat | Zinkphosphat |
| Z3* | 94,0 | 5,5 | 0,5 |
| Z4 | 71,5 | 26,2 | 2,3 |
| Z5 | 77,0 | 21,2 | 1,8 |
| Z6 | 80,0 | 18,0 | 2,0 |
| Z7* | 54,8 | 42,5 | 2,7 |

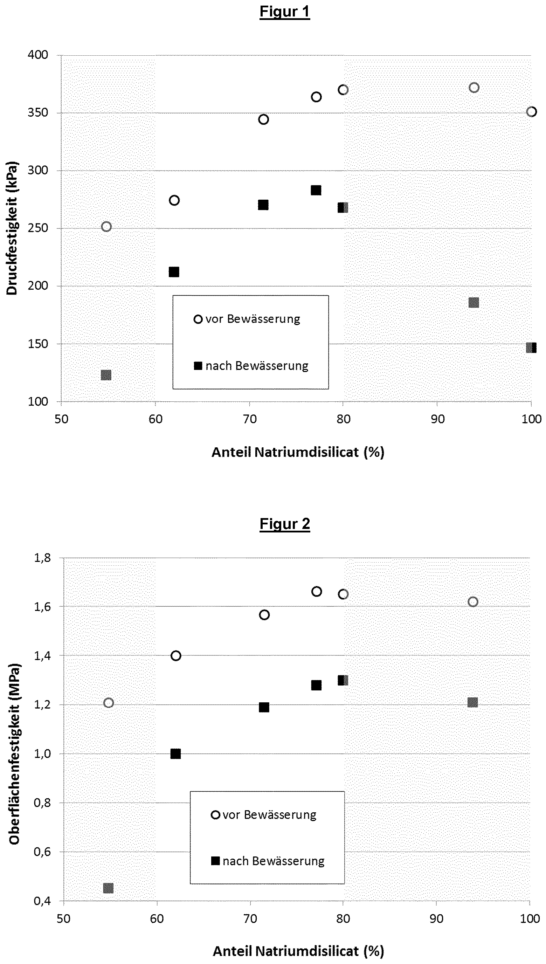

Die mit den unterschiedlichen Bindemittelzusammensetzungen erzielten Druckfestigkeiten und Oberflächenhärten sind in Tabelle 2 und den Abbildungen 1 und 2 aufgeführt:

Tabelle 2: Druckfestigkeit und Härte der Probekörper vor und nach Bewässerung

| (Lagerung in 70°C warmen Wasser für 2h nach chinesischer Testvorschrift) (mit * markierte Zusammensetzungen sind nicht erfindungsgemäß) | | | | | | |
|---|---|---|---|---|---|---|
| Beispiel | Druckfestigkeit (kPa) | | | Oberflächenhärte (MPa) | | |
| | vor Bewässerung | nach Bewässerung | Δ (%) | vor Bewässerung | Nach Bewässerung | Δ (%) |
| Z1 | 275 | 212 | 23 | 1,4 | 1 | 29 |
| Z2* | 351 | 147 | 58 | - | - | - |
| Z3* | 372 | 186 | 50 | 1,62 | 1,21 | 25 |
| Z4 | 345 | 270 | 22 | 1,57 | 1,19 | 24 |
| Z5 | 364 | 283 | 22 | 1,66 | 1,28 | 23 |
| Z6 | 370 | 268 | 28 | 1,65 | 1,30 | 21 |
| Z7* | 252 | 123 | 51 | 1,21 | 0,45 | 63 |

Nur die Zusammensetzungen im erfindungsgemäßen Bereich der Bindemittelzusammensetzung erfüllen die Anforderungen der chinesischen technischen Regularien JG/T 435-2014 für "General specification of inorganic lightweight aggregate board for fireproof and insulation", die einen Druckfestigkeitsverlust von maximal 40% des Ausgangswertes nach einer 2 stündigen Bewässerung mit 70°C warmem Wasser zulässt.

## 2. Bindung von Quarzsand

In den folgenden Beispielen wird an Hand von Prüfkörpern aus dem Referenzfüllstoff Quarzsand gezeigt, wie mit dem erfindungsgemäßen Bindemittelsystem die gewünschten Eigenschaften, wie schnelle Abbindezeit, sowie hohe Wasser- und Witterungsbeständigkeit bei gleichzeitig ausreichenden Festigkeiten, erreicht werden können.

Als Referenzfüllstoff wird Quarzsand H33 der Firma Quarzwerke verwendet. Aus 200 g Quarzsand H33 wird durch Zugabe von 38 g Bindemittel und 25 bis 35 g Wasser (je nach Bedarf) eine Masse angemischt. Das Abbindeverhalten der so erhaltenen Masse wird in einem Ultraschalltestgerät (Ultrasonic Tester IP-8 der Firma Ultratest GmbH) durch Ultraschallanalyse verfolgt. Die zeitabhängig gemessene Laufzeit der durch die Masse gesendeten Ultraschallimpulse erlaubt die Berechnung der Ultraschallgeschwindigkeit. Aus dieser kann anschließend nach Bestimmung der Dichte $\rho$ das Elastizitätsmodul E berechnet werden, das ein Maß für den Widerstand gegen Verformung und somit auch für die Aushärtung ist. Je stärker der zeitliche Anstieg des E-Moduls ist, umso schneller härtet die Masse aus.

Die Prüfkörper der erfindungsgemäßen Bindemittelsysteme B bis I erreichen in dem verwendeten Referenzsystem nach ca. 30 Minuten E-Module ≥ 200 MPa. Dieser Wert wird als unterer Referenzwert betrachtet, da oberhalb dieses Wertes da eine Verformung ohne Hilfsmittel kaum noch möglich ist und somit eine ausreichende Grünfestigkeit erreicht ist. Alle Prüfkörper erreichen Endwerte des E-Moduls von ≥ 600 MPa im nichtgetrockneten Zustand nach ca. 10h. Dieser Wert wird als ausreichend für den Widerstand gegen Verformung betrachtet.

Nach Beendigung der Messung wird der Prüfkörper dem Prüfgerät entnommen und bei 110°C 12h lang getrocknet. Anschließend wird der Verbundkörper 5h in Wasser bei 120°C und 2 bar gelagert. Für die Bewertung der Witterungs- und Wasserbeständigkeit werden der Masseverlust, die Festigkeit der Oberfläche gegen Abrieb, die Bruchfestigkeit der Kanten sowie die Druckfestigkeit des Prüfkörpers bewertet. Der Masseverlust wird prozentual zum Ausgangswert berechnet. Die Druckfestigkeit wird mit einem Druckprüfgerät gemessen. Die Festigkeitswerte der Oberfläche und Kanten werden manuell nach folgenden Kriterien im Notenschema von 1 bis 5 bewertet.

Tabelle 3: Bewertungsschema Oberflächen- und Kantenfestigkeit Probekörper

| Note | Abriebfestigkeit Oberfläche | Bruchfestigkeit Kante |
|------|-----------------------------|------------------------|
| 1 | kein Abrieb möglich | Kante bricht bei starkem Druck nicht ab |
| 2 | Abrieb einzelner Sandkörner | Kante bricht bei mittlerem Druck nicht ab |
| 3 | mäßiger Abrieb, Oberfläche wird aufgeraut | Kante bricht bei leichtem Druck nicht ab |
| 4 | starker Abrieb, hoher Materialabtrag | Kante bricht bei leichtem Druck ab |
| 5 | Körper zerfällt | Kante bereits stark abgerundet |

Prüfkörper gebunden mit erfindungsgemäßem Bindemittel weisen Masseverluste nach der 5 stündigen Lagerung bei 120°C und 2 bar von $\leq$ 5,0 % auf. Prüfkörper gebunden mit erfindungsgemäßem Bindemittel weisen zudem Bewertungen von mindestens 3 in den Bewertungen der Oberflächen- und Kantenfestigkeit auf. Prüfkörper gebunden mit erfindungsgemäßem Bindemittel weisen zudem Druckfestigkeiten $\geq$ 3 MPa auf.

Tabelle 4: Zusammensetzung der Referenzmassen

| Komponente | A [Gew.-%] | | | | B [Gew.-%] | | | | | C [Gew.-%] | | |
|---|---|---|---|---|---|---|---|---|---|---|---|---|
| (mit * markierte Zusammensetzungen sind nicht erfindungsgemäß) | | | | | | | | | | | | |
| Typ | Britesil C20 | Britesil C265 | Lithopix S2 | Kasolv 16 | Zinkborat Typ 20 | X 17 | X 19 | X 40 | Zinkborat | Fabutit 305 | E 54-80 | Z33-81 |
| Hersteller/ Lieferant | PQ | | Z&S | PQ | Schälchli Chemie | - | | | Harmillion Chem. Ltd. | Budenheim | | |
| Zusammensetzung | $Na_2O \cdot 2SiO_2$ | $Na_2O \cdot 2{,}7SiO_2$ | $Na_2O \cdot 2SiO_2$ | $K_2O \cdot 2{,}55SiO_2$ | $2ZnO \cdot 3B_2O_3 \cdot 5H_2O$ | $ZnO \cdot 0{,}3\,Fe_2O_3 \cdot 3B_2O_3 \cdot 5{,}5H_2O$ | $1{,}8ZnO \cdot 0{,}2\,Al_2O_3 \cdot 3B_2O_3 \cdot 4{,}5H_2O$ | $1{,}5MgO \cdot 1{,}2CaO \cdot 3{,}4B_2O_3 \cdot 3{,}8H_2O$ | $2ZnO \cdot 3B_2O_3 \cdot 3{,}5H_2O$ | $AlH_2P_3O_{10} \cdot 2H_2O$ | $Fe_4{<}P_2O_7)_3$ | $Zn_3(PO_4)_2$ |
| **Anteil (Gew.-%)** | | | | | | | | | | | | |
| A* | 66,7 | | | | 33,3 | | | | | | | |
| B | 66,7 | | | | 28,0 | | | | | | 6,3 | |
| C | 66,7 | | | | 30,3 | | | | | | 3,0 | |
| D | 66,7 | | | | 27,8 | | | | | | | 5,6 |
| E | | | 66,7 | | | | 30,0 | | | | 3,3 | |
| F | 61,9 | | | | | | | | 35,0 | | | 3,1 |
| G | 75,0 | | | | | | | | 18,9 | 6,1 | | |
| H | | 69,4 | | | | 21,7 | | | | 8,9 | | |
| I | | | | 61,9 | | | | 31,1 | | | | 6,9 |

EP 3 107 878 B1

Tabelle 5: Leistungsparameter der Referenzmassen

| (mit * markierte Zusammensetzungen sind nicht erfindungsgemäß) | | | | | | |
|---|---|---|---|---|---|---|
| Parameter | E-Modul (30min) (MPa) | E-Modul (max.) (MPa) | Masseverlust nach 300min 120°C (%) | Kantenfestigkeit nach 300min 120°C | Oberflächenfestigkeit nach 300min 120°C | Druckfestigkeit nach 300min 120°C (MPa) |
| A* | 105 | 1187 | 5,8 | 4,0 | 4,0 | 1,9 |
| B | 300 | 1188 | 3,1 | 3,0 | 3,0 | 6,4 |
| C | 609 | 1181 | 2,7 | 2,5 | 3,0 | 7,6 |
| D | 543 | 1280 | 2,5 | 2,0 | 2,5 | 8,4 |
| E | 312 | 1140 | 4,1 | 2,0 | 1,0 | 9,5 |
| F | 807 | 1110 | 4,2 | 2,5 | 1,0 | 9,1 |
| G | 303 | 1179 | 2,0 | 3,0 | 1,0 | 3,5 |
| H | 202 | 1108 | 3,3 | 2,0 | 1,5 | 10,1 |
| I | 244 | 660 | 4,8 | 3,0 | 3,0 | 3,2 |

**Patentansprüche**

**1.** Bindemittelsystem mit einem Metallborat als Härterkomponente und einem Alkalisilicat als Binderkomponente, **dadurch gekennzeichnet, dass** es zu wenigstens 90 Gew.-% aus einer Bindemittelbasis mit der folgenden Zusammensetzung besteht:

18 bis 40 Gew.-% Härterkomponente A, bestehend aus wenigstens einem Borat der allgemeinen Formel $w\, M^{II}O \cdot x\, M^{III}_2O_3 \cdot y\, B_2O_3 \cdot z\, H_2O$, wobei
$M^{II}$ = Mg, Ca, Sr, Zn oder Cu und $0,5 \leq w \leq 4$,
$M^{III}$ = Al, Fe oder Cr und $0 \leq x \leq 0,5$,
$1,5 \leq y \leq 3,5$,
$0,33 \leq \sum w/y \leq 1,34$,
$0 \leq \sum x/y \leq 0,25$ und
$0 \leq z \leq 7,0$

55 bis 80 Gew.-% Binderkomponente B, bestehend aus wenigstens einem Alkalisilicat der allgemeinen Formel: $R_2O \cdot x\, SiO_2$, wobei
R = Na oder K und
$2,0 \leq x \leq 3,35$ und

1 bis 10 Gew.-% Beschleunigerkomponente C, bestehend aus einem Metallsalz der Ortho-, Di- oder Triphosphorsäure, ausgewählt unter vollständig deprotonierten Ortho- und Diphosphaten von Nichtalkalimetallen der 3., 4. und 5. Periode und Aluminiumdihydrogentriphosphat oder einem Gemisch hiervon.

**2.** Bindemittelsystem nach Anspruch 1, **dadurch gekennzeichnet, dass** die Härterkomponente A und die Beschleunigerkomponente C im Gemisch vorliegen.

**3.** Bindemittelsystem nach einem der vorangehenden Ansprüche, **dadurch gekennzeichnet, dass** die Beschleunigerkomponente C ein Orthophosphat enthält, dass unter Zinkorthophosphat, Zirkoniumorthophosphat oder Cobaltorthophosphat oder einem Gemisch hiervon ausgewählt ist.

**4.** Bindemittelsystem nach einem der vorangehenden Ansprüche, **dadurch gekennzeichnet, dass** die Beschleunigerkomponente C ein Diphosphat enthält, das unter Eisen(III)-diphosphat, Zinkdiphosphat oder einem Gemisch hiervon ausgewählt ist.

5. Bindemittelsystem nach einem der vorangehenden Ansprüche, **dadurch gekennzeichnet, dass** die Ortho-, Di- oder Triphosphate in der Beschleunigerkomponente C entweder als Anhydrat oder als Hydrat vorliegen.

6. Bindemittelsystem nach einem der vorangehenden Ansprüche, **dadurch gekennzeichnet, dass** es neben der Bindemittelbasis zusätzlich noch einen Anteil einer Additivkomponente D zur Verbesserung der Wasserbeständigkeit und/oder einen Anteil einer Hilfsstoffkomponente E zur Verbesserung der Fließeigenschaften oder zur Verbesserung der Benetzungseigenschaften und/oder einen Anteil einer Farbstoffkomponente F und/oder einen Anteil einer Pigmentkomponente G enthält.

7. Bindemittelsystem nach einem der vorangehenden Ansprüche, **dadurch gekennzeichnet, dass** die maximale Partikelgröße der in einer der Komponenten enthaltenen Partikel oder aller in dem Bindemittel enthaltenen Partikel 200 $\mu$m beträgt.

8. Bindemittelsystem nach einem der vorangehenden Ansprüche, **dadurch gekennzeichnet, dass** die maximale Partikelgröße der in einer der Komponenten enthaltenen Partikel oder aller in dem Bindemittel enthaltenen Partikel 10 $\mu$m beträgt.

9. Bindemittelsystem nach einem der vorangehenden Ansprüche, **dadurch gekennzeichnet, dass** die in einer der Komponenten enthaltenen Partikel oder alle in dem Bindemittel enthaltenen Partikel eine wasserbeständige Beschichtung aufweisen, die sich in alkalischer Umgebung auflöst.

10. Bindemittelsystem nach einem der vorangehenden Ansprüche, **dadurch gekennzeichnet, dass** der Anteil der Binderkomponente B an der Bindemittelbasis 55 bis 75 Gew.-% beträgt.

11. Bindemittelsystem nach einem der vorangehenden Ansprüche, **dadurch gekennzeichnet, dass** bei dem wenigstens einen Borat der allgemeinen Formel w $M^{II}O \cdot x\ M^{III}_2O_3 \cdot y\ B_2O_3 \cdot z\ H_2O$, aus dem die Härterkomponente A besteht, $0{,}66 \leq \sum w/y \leq 1{,}34$ ist.

12. Verfahren zur Herstellung eines Bindemittels oder eines Verbundwerkstoffs, **dadurch gekennzeichnet, dass** einem Bindemittelsystem nach einem der vorangehenden Ansprüche Wasser zugesetzt wird, wobei das Gewichtsverhältnis Wasser zu Bindemittelsystem in dem Bereich von 0,5 bis 1,5 liegt.

13. Verfahren nach Anspruch 12, **dadurch gekennzeichnet, dass** das Bindemittelsystem mit einem Füllstoff oder Funktionsstoff vermischt wird.

14. Verfahren nach einem der vorangehenden Ansprüche, **dadurch gekennzeichnet, dass** die Bindereaktion bei Temperaturen in dem Bereich von 0 bis 80°C durchgeführt wird.

15. Verfahren nach einem der vorangehenden Ansprüche, **dadurch gekennzeichnet, dass** die Bindereaktion durch Mikrowellenstrahlung unterstützt wird.


**Claims**

1. Binding material system with a metal borate as hardener component and an alkali silicate as binder component, **characterized in that** at least 90 wt.-% of it consists of a binding material base with the following composition:

| 18 to 40 wt.-% | hardener component A, consisting of at least one borate of the general formula w $M^{II}O \cdot x\ M^{III}_2O_3 \cdot y\ B_2O_3 \cdot z\ H_2O$, wherein <br> $M^{II}$ = Mg, Ca, Sr, Zn or Cu and $0.5 \leq w \leq 4$, <br> $M^{III}$ = Al, Fe or Cr and $0 \leq x \leq 0.5$, <br> $1.5 \leq y \leq 3.5$, <br> $0.33 \leq \sum w/y \leq 1.34$, <br> $0 \leq \sum x/y \leq 0.25$ and <br> $0 \leq z \leq 7.0$ |
|---|---|

(continued)

| 55 to 80 wt.-% | binder component B, consisting of at least one alkali silicate of the general formula: $R_2O \cdot x \ SiO_2$, wherein<br>R = Na or K and<br>$2.0 \leq x \leq 3.35$ and |
|---|---|
| 1 to 10 wt.-% | accelerator component C, consisting of a metal salt of ortho-, di- or triphosphosphoric acid, selected from completely deprotonated ortho- and diphosphates of non-alkali metals of the 3rd, 4th and 5th period and aluminium dihydrogen triphosphate or a mixture thereof. |

2. Binding material system according to claim 1, **characterized in that** the hardener component A and the accelerator component C are present in a mixture.

3. Binding material system according to one of the previous claims, **characterized in that** the accelerator component C contains an orthophosphosphate which is selected from zinc orthophosphate, zirconium orthophosphate or cobalt orthophosphate or a mixture thereof.

4. Binding material system according to one of the previous claims, **characterized in that** the accelerator component C contains a diphosphosphate which is selected from iron(III) diphosphate, zinc diphosphate or a mixture thereof.

5. Binding material system according to one of the previous claims, **characterized in that** the ortho-, di- or triphosphosphates are present in the accelerator component C either as an-hydrate or as hydrate.

6. Binding material system according to one of the previous claims, **characterized in that**, in addition to the binding material base, it additionally also contains a proportion of an additive component D for improving the resistance to water and/or a proportion of an excipient component E for improving the flow properties or for improving the wetting properties and/or a proportion of a dye component F and/or a proportion of a pigment component G.

7. Binding material system according to one of the previous claims, **characterized in that** the maximum particle size of the particles contained in one of the components or of all the particles contained in the binding material is 200 $\mu$m.

8. Binding material system according to one of the previous claims, **characterized in that** the maximum particle size of the particles contained in one of the components or of all the particles contained in the binding material is 10 $\mu$m.

9. Binding material system according to one of the previous claims, **characterized in that** the particles contained in one of the components or all the particles contained in the binding material have a water-resistant coating which dissolves in an alkaline environment.

10. Binding material system according to one of the previous claims, **characterized in that** the proportion of the binder component B at the binding material base is 55 to 75 wt.-%.

11. Binding material system according to one of the previous claims, **characterized in that** $0.66 \leq \sum w/y \leq 1.34$ is true for the at least one borate of the general formula $w \ M^{II}O \cdot x \ M^{III}_2O_3 \cdot y \ B_2O_3 \cdot z \ H_2O$, of which the hardener component A consists.

12. Method for producing a binding material or a composite material, **characterized in that** water is added to a binding material system according to one of the previous claims, wherein the weight ratio of water to binding material system lies in the range from 0.5 to 1.5.

13. Method according to claim 12, **characterized in that** the binding material system is mixed with a filler or a functional substance.

14. Method according to one of the previous claims, **characterized in that** the binding reaction is carried out at temperatures in the range from 0 to 80°C.

15. Method according to one of the previous claims, **characterized in that** the binding reaction is supported by microwave radiation.

**Revendications**

1. Système de liant comportant un borate métallique en tant que composant durcisseur et un silicate alcalin en tant que composant liant, **caractérisé en ce qu'**il est constitué, à raison d'au moins 90 % en poids, d'une base de liant ayant la composition suivante :

18 à 40 % en poids d'un composant durcisseur A, constitué d'au moins un borate de formule générale $wM^{II}O . xM^{III}_2O_3 . yB_2O_3 . zH_2O$, dans laquelle :

$$M^{II} = Mg, Ca, Sr, Zn \text{ ou } Cu, \text{ et } 0,5 \leq w \leq 4,$$

$$M^{III} = Al, Fe \text{ ou } Cr, \text{ et } 0 \leq x \leq 0,5,$$

$$1,5 \leq y \leq 3,5,$$

$$0,33 \leq \Sigma w/y \leq 1,34,$$

$$0 \leq \Sigma w/y \leq 0,25$$

et

$$0 \leq z \leq 7,0$$

55 à 80 % en poids d'un composant liant B, constitué d'au moins un silicate alcalin de formule générale $R_2O . xSiO_2$, dans laquelle

$$R = Na \text{ ou } K,$$

et

$$2,0 \leq x \leq 3,35,$$

et
1 à 10 % en poids d'un composant accélérateur C, constitué d'un sel métallique de l'acide ortho-, di- ou triphosphorique, choisi parmi des ortho- et diphosphates entièrement déprotonés de métaux non alcalins du troisième, quatrième et cinquième groupes de la classification périodique, et le dihydrogénotriphosphate d'aluminium, ou un mélange de ceux-ci.

2. Système de liant selon la revendication 1, **caractérisé en ce que** le composant durcisseur A et le composant accélérateur C sont présents en mélange.

3. Système de liant selon l'une des revendications précédentes, **caractérisé en ce que** le composant accélérateur C contient un orthophosphate qui est choisi parmi l'orthophosphate de zinc, l'orthophosphate de zirconium et l'orthophosphate de cobalt, ou un mélange de ceux-ci.

4. Système de liant selon l'une des revendications précédentes, **caractérisé en ce que** le composant accélérateur C contient un diphosphate qui est choisi parmi le diphosphate de fer(III), le diphosphate de zinc ou un mélange de ceux-ci.

5. Système de liant selon l'une des revendications précédentes, **caractérisé en ce que** les ortho-, di- ou triphosphates du composant accélérateur C se présentent sous forme d'un composé anhydre ou d'un hydrate.

6. Système de liant selon l'une des revendications précédentes, **caractérisé en ce qu'**en plus de la base de liant, il contient en outre encore une proportion d'un composant additif D destiné à améliorer la résistance à l'eau et/ou une proportion d'un composant adjuvant E destiné à améliorer les propriétés d'écoulement ou à améliorer les propriétés de mouillage et/ou une proportion d'un composant colorant F et/ou une proportion d'un composant pigment G.

7. Système de liant selon l'une des revendications précédentes, **caractérisé en ce que** la granulométrie maximale des particules contenues dans l'un des composants ou de l'ensemble des particules contenues dans le liant est de 200 $\mu$m.

8. Système de liant selon l'une des revendications précédentes, **caractérisé en ce que** la granulométrie maximale des particules contenues dans l'un des composants ou de l'ensemble des particules contenues dans le liant est de 10 $\mu$m.

9. Système de liant selon l'une des revendications précédentes, **caractérisé en ce que** les particules contenues dans l'un des composants ou l'ensemble des particules contenues dans le liant présentent un revêtement imperméable à l'eau qui se dissout dans un environnement alcalin.

10. Système de liant selon l'une des revendications précédentes, **caractérisé en ce que** la proportion du composant liant B dans la base de liant est de 55 à 75 % en poids.

11. Système de liant selon l'une des revendications précédentes, **caractérisé en ce que**, dans le ou les borates de formule générale $wM^{II}O . x M^{III}_2O_3 . yB_2O_3 . zH_2O$ dont est constitué le composant durcisseur A, $0,66 \leq \sum w/y \leq 1,34$.

12. Procédé de fabrication d'un liant ou d'un matériau composite, **caractérisé en ce qu'**on ajoute de l'eau à un système de liant selon l'une des revendications précédentes, le rapport pondéral de l'eau au système de liant étant compris dans la plage de 0,5 à 1,5.

13. Procédé selon la revendication 12, **caractérisé en ce que** le système de liant est mélangé à une matière de charge ou à une substance fonctionnelle.

14. Procédé selon l'une des revendications précédentes, **caractérisé en ce que** la réaction de liaison est mise en oeuvre à des températures comprises dans la plage de 0 à 80 °C.

15. Procédé selon l'une des revendications précédentes, **caractérisé en ce que** la réaction de liaison est soutenue par un rayonnement micro-ondes.

## Figur 1

## Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2443717 A1
- EP 1205439 A1
- DE 3043856
- DD 220950
- EP 1205439 A

**In der Beschreibung aufgeführte Nicht-Patentliteratur**

- **SUZUKI ; TOMIO ; NAITO ; YOSHIMASA ; WATANABE ; KIMIE.** Inorganic binder compositions. *Chemical Abstracts,* 14. Mai 1990, vol. 114 (25), 8
- Inorganic binder for building material. *Chemical Abstracts,* 19. April 1976, vol. 84